Europäisches Patentamt

European Patent Office

Office européen des brevets

(11) Publication number: **0 190 302 B1**

(12) **EUROPEAN PATENT SPECIFICATION**

(45) Date of publication of patent specification: **15.11.89**

(21) Application number: **85904119.6**

(22) Date of filing: **08.08.85**

(86) International application number:
**PCT/GB85/00352**

(87) International publication number:
**WO 86/01310 27.02.86 Gazette 86/05**

(51) Int. Cl.⁴: **G 03 B 37/06**

(54) **INFORMATION DISPLAY.**

(30) Priority: **08.08.84 GB 8420120**

(43) Date of publication of application:
**13.08.86 Bulletin 86/33**

(45) Publication of the grant of the patent:
**15.11.89 Bulletin 89/46**

(84) Designated Contracting States:
**BE CH DE FR GB IT LI NL SE**

(56) References cited:
**DE-A-2 838 448**
**FR-A-2 301 035**
**FR-A-2 438 308**
**US-A-3 420 605**

(73) Proprietor: **MISSON, Pierre**
**13 Lampson Road Killearn**
**Glasgow G63 9PD (GB)**

(72) Inventor: **MISSON, Pierre**
**13 Lampson Road Killearn**
**Glasgow G63 9PD (GB)**

(74) Representative: **Pacitti, Pierpaolo Alfonso M.E.**
**et al**
**Ian G. Murgitroyd and Company Mitchell House**
**333 Bath Street**
**Glasgow G2 4ER (GB)**

Courier Press, Leamington Spa, England.

# Description

This invention relates to the acquisition and visual presentation of information.

The invention is applicable particularly but by no means exclusively to the presentation of information to operators of remote-controlled vehicles, for example underwater vehicles used in petroleum offshore operations, pilots of remote control aircraft, space probes, flight simulators, etc.

At present, remote controlled vehicles are commonly provided with a television camera for relaying to the remote operator information about the environment of the vehicle. Such cameras commonly have a narrow field of view directed forwards. Lateral views can be obtained by swivelling the camera, but it is very difficult for a remoteoperator to interpret such information, particularly while the vehicle is moving. The remote control of underwater and other vehicles is therefore extremely difficult and requires very skilled operators. DE-A-2,838,448 describes a display system for presenting information on a curved screen. However, due to the positioning of the projector and the viewer distortion in the presented information results.

The remote control of such vehicles would be much easier and less fatiguing, if the operator were presented with information about the environment of the vehicle, in a manner resembling as closely as possible the extensive field of view which the operator is used to in normal life, for example while driving a car.

Thus according to one aspect of the invention, the operator of a remote controlled vehicle is presented with information about the environment of the vehicle, acquired and displayed over a large solid angle.

The information is presented visually, however the information may be acquired in a variety of ways for example by visible light, infrared radiation, or active or passive sound scanning, using suitable transducers. For example, in the case of an underwater vehicle the range of visible light may be insufficient and it may therefore be preferable to acquire information about the surroundings of the vehicle by sonic sounding, the echoes being suitably processed to provide a visual display.

In the case of information acquired as light by a television camera or the like, the requisite large solid angle of view can be provided for example by a fish eye lens. Suitable lenses exist to give a solid angle of 180°. This enables a conventional television camera of limited field of view to be used. With such an arrangement, the expansion of the field of view of the television camera inevitably causes some loss of definition in the transmitted image. However this is of little or no practical importance. In the case of an underwater vehicle it is often sufficient if the operator can see only the general outline of an object a few metres away and therefore limited definition is acceptable. In fast moving vehicles it is the relative position of obstacles, targets and vehicles that is important to acquire.

The acquired information can be presented to the operator of an unmanned vehicle, or to another viewer, by a projection from a cathode ray screen or laser projector through a fish eye projection lens. In this way the information acquired over a large solid angle can be projected over a suitably large solid angle, preferably identical to that over which the information was acquired. Equally, the acquired information can be presented by back projection on multicathode ray screens of the appropriate shape and made of an assembly of cathode ray tubes or purposely made solid state screen.

The visual display is preferably presented to the viewer from a concave screen, extending over for example 180°, so that the viewer has the impression of being surrounded by the display just as the underwater vehicle (for example) was surrounded by the environment being displayed.

A problem which can arise, is that the projector is not at exactly the same position as the eyes of the viewer, therefore parallax errors can arise. According to an aspect of this invention, parallax errors are eliminated by using a screen in the form of a sphere or part of a sphere, and locating the eyes of the viewer and the projector on the surface of the sphere. Preferably, the "horizon" of the projected scene is arranged to be level with the eyes of the viewer, for the most comfortable viewing.

Multiple projectors can be mounted on the same spherical surface, for example to project an overlay of acoustic as well as visible light information, or an overlay of computer-generated information.

A spherical screen as just described can be relatively small, and can provide a display system suitable for use aboard ship or aboard a spacecraft, where space for equipment and personnel is very limited.

Where space is not limited, for example on land, one can use a similar projection system with a projector or projectors for one or more viewers, on the spherical surface which constitutes a screen.

Aspects of the present invention are illustrated by the accompanying drawings, in which:-

Fig. 1 shows schematically a projection system according to the invention; and

Fig. 2 shows schematically a monitoring system for an underwater or other remote controlled vehicle.

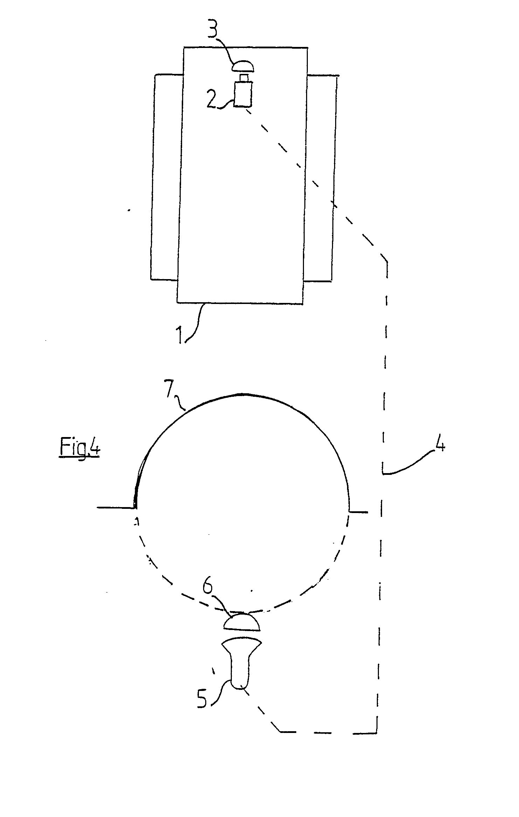

Fig. 2 shows schematically a free-swimming underwater vehicle 1 (or a seabed crawler) equipped with a conventional forward-looking television camera 2. To expand the normal narrow angle of vision of this camera, a fish eye lens is provided, giving an overall field of view of about 180° solid angle. The signals transmitted by the camera, for example over a fibre optic cable link 4, therefore show the environment not only in front of the vehicle but to the sides of its path.

To present this information to the remote operator, it is projected from a cathode ray tube 5, for example of the high-intensity projection type, through a further fish eye lens 6 onto a concave screen 7 which is viewed internally by the operator who, in this way, can gain the illusion of being on the vehicle with his own normal wide angle of vision, and therefore his feeling for the environment of the vehicle and his ability to control the vehicle are greatly enhanced, while at the same time operating the vehicle involves less stress than if the operator were simply viewing a conventional television screen showing the narrow forward view from a conventional television camera.

The camera may be a colour or monochrome camera. The lens system is preferably an afocal fish eye lens system covering a lateral field of vision of 180° or even more, and a vertical field of vision of 120° or more. The image sensor (camera) and processing electronics should give an image resolution better than 10 lines per degree. A resolution of 30 lines per degree is a reasonable compromise between equipment cost and high resolution.

The surface image system for the operator should be arranged to minimise parallax and distortion when seen by the operator. Means for achieving this will be described below.

The display may include overlaid grids and data for navigation, for example generated by computer, and controllable by the operator, in the manner of a "head up" display. Other overlaid information may comprise acoustic images, and computer-generated drawings of the target of the vehicle's mission, which may use separate projectors, whether or television type or laser beam scanning.

Additionally, the operator's station may be provided with audio channels for reproducing sounds in the environment of the vehicle and in the vehicle itself, in order further to enhance the operator's awareness of the vehicle, its performance and its environment.

For further enhancement of the operator's awareness, the operator's seat may be made to move so as to simulate the attitude and acceleration of the vehicle as detected by suitable sensors on the vehicle. For example, the operator's platform may be mounted on gimbals giving pitch and roll over, for example, 20° (alarm for accidental tilt above these values) and rotation around the vertical axis to follow a change of heading of the vehicle.

By means such as these, the performance of the operator can be enhanced and at the same time operator fatigue can be reduced, without a disproportionate increase in the cost of the guidance system for the vehicle.

In particular, the optical system need cost little more than a conventional remote television guidance system, since it additionally requires only the fish eye lens systems and concave screen, in its simplest form. Additional features such as overlay images can be provided as required, by addition of further projectors.

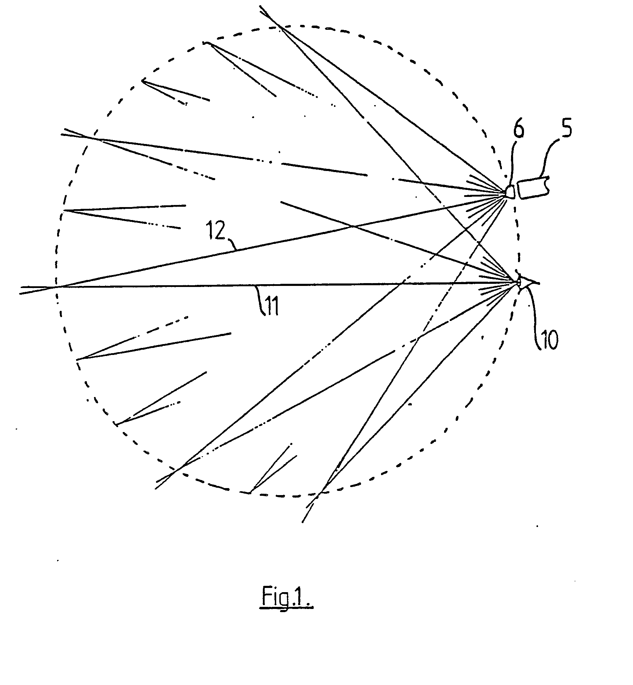

The projection system should be designed to minimse distortion and parallax errors due to differences in position between the eye of the operator and projector. With a projection system in which the projector is at the centre of a hemispherical screen (the simple inverse of the data acquisition system on the vehicle) parallax can be substantially eliminated only if a large screen radius is used. This is impractical aboard ship and in many other environments where remote operated vehicles are piloted. A projection system capable of overcoming this will be explained with reference to Fig. 1.

Fig. 1 shows the eye 10 of a viewer, and a projector 5 provided with a fish eye lens 6 to spread the image over substantially 180° horizontally and 120° vertically. Fig. 1 also shows the viewer's line of sight 11 to the viewer's horizon, and the corresponding ray 12 which projects the horizon. If the screen coincides with the intersection of the lines 11 and 12, there will be no parallax at the horizon.

Similarly, for other corresponding lines of sight and projected rays, making equal angles with the respective lines 11 and 12, the intersections define screen positions for which there is no parallax. I have determined that these intersections lie on the surface of a sphere which passes through the eye of the viewer and the projecting lens. Accordingly, parallax can be eliminated, if the screen is a sphere, the viewer's eye is on the surface of the sphere, for example in a hole cut out to accept the head of the viewer, and the projector is mounted so that its effective point of radiation is on the same spherical surface. Indeed, multiple projectors mounted on the same surface will all give parallax-free images for the viewer. It is however desirable that the projector or projectors be mounted close to the head of the viewer, particularly in the case of a small screen.

The separation between the eye and the projector does not alter the radius of the zero-parallax sphere, but does slightly change the position of the centre of the sphere, therefore if multiple projectors are used, they should be carefully aligned, and positioned as close as possible to the head of the viewer. The radius of the sphere depends essentially only on the angle of inclination of the projector relative to the line of sight of the viewer, and can be made quite small, which is a great advantage for use aboard ship and in other confined environments.

A further possibility is to use a zero-parallax spherical screen of large radius, as shown schematically in Fig. 2, with the viewers placed, fairly close to the projector, for example on the floor of a projection room around the projector. With a sufficiently large screen, several viewers can be placed with their heads close enough to the imaginary spherical surface near the projector, to view the image on the screen with little or no parallax error. A further possibility is to use this kind of projection arrangement, in conjunction with stepped seats or stands so that a large number of viewers can be placed with their heads close to the imaginary zero parallax spherical surface below the screen, for example in a seating arrangement resembling a classical lecture theatre with a hemispherical ceiling, the projector being placed in the well of the theatre and directed upwards.

The data acquisition and presentation system described is applicable not only to the piloting or remote operated underwater vehicles, but also to remote operated vehicles in space, in nuclear plant, in mining, tunnelling, sewer work and many other applications.

The projection systems described are also applicable in numerous other fields, for example in vehicle simulators, video games (arcade games), planetariums, and overhead projector systems.

In all these applications the projection axis can be vertical, horizontal, or at any other inclination to suit the particular application.

## Claim

An information display system wherein information is collected through a fish eye lens and thereafter said information is projected onto a concave part-spherical screen (7, 15) through a projecting fish eye lens (6), characterised in that the projecting means (6) is located at a projection point positioned on the virtual surface of the screen and in that a viewing location (10) is located at a viewing point also positioned on the virtual surface of the screen, such that said projection point (6) and said viewing point (10) subtend the same angle at every point on the concave screen.

## Patentanspruch

Informations-Displaysystem, bei dem eine Information durch eine Fischaugenlinse gesammelt und danach diese Information durch eine Projektions-Fischaugenlinse (6) auf einen konkaven, partiell sphärischen Schirm (7, 15) projiziert wird, dadurch gekennzeichnet, dass die Projektionseinrichtung (6) an einem Projektionspunkt auf der virtuellen oberfläche des Schirms angeordnet ist, und dass ein Sichtfeld (10) an einem ebenfalls auf der virtuellen oberfläche des Schirms derart angeordneten Sichtpunkt vorgesehen ist, dass der Projektionspunkt (6) und der Sichtpunkt (10) an jedem Punkt des konkaven Schirms demselben Winkel gegenüberliegen.

## Revendication

Dispositif de visualisation d'information, dans lequel l'information est collectée au travers d'un grand angulaire extrême puis projetée sur un écran concave (7, 15) partiellement sphérique au travers d'un grand angulaire extrême (6) de projection, caractérisé en ce que les moyens de projection (6) sont disposés en un point de projection situé sur la surface virtuelle de l'écran, et en ce qu'un emplacement d'observation (10) est disposé en un point d'observation également situé sur la surface virtuelle de l'écran, de telle manière que ledit point de projection (6) et ledit point d'observation (10) soustendent le même angle à chaque point sur l'écran concave.

Fig.1.

Fig.4